# EUROPÄISCHE PATENTSCHRIFT

(11) **EP 3 084 936 B1**
(45) Veröffentlichungstag und Bekanntmachung des Hinweises auf die Patenterteilung: **20.04.2022**
(21) Anmeldenummer: 14781483.4
(22) Anmeldetag: 23.09.2014
(51) Int. Cl.: H02K 15/02, H02K 1/24, H02K 1/28, H02K 29/06

(54) **RELUKTANZROTOR AUFWEISEND EIN RELUKTANZROTORBLECH MIT AUSSPARUNG ZUR SPANNUNGSREDUKTION**
RELUCTANCE ROTOR COMPRISING A LAMINATION HAVING AN OPENING FOR STRESS REDUCTION
ROTOR A RELUCTANCE COMPRENANT UNE TOLE DE ROTOR AVEC UN EVIDEMENT SERVANT A REDUIRE LES TENSIONS

(30) Priorität: 31.01.2014 EP 14153448
(43) Veröffentlichungstag der Anmeldung: 26.10.2016
(73) Patentinhaber: Siemens Aktiengesellschaft, 80333 München (DE)
(72) Erfinder: BALLWEG, Marion, 97494 Bundorf (DE); BÜTTNER, Klaus, 97618 Hollstadt (DE)
(86) Internationale Anmeldenummer: PCT/EP2014/070254
(87) Internationale Veröffentlichungsnummer: WO 2015/113656

(56) Entgegenhaltungen:
- EP-A2- 1 734 639
- DE-A1-102009 047 485
- JP-A- 2000 050 548
- JP-A- 2008 275 385
- JP-A- 2012 196 033
- US-B1- 6 259 181

## Beschreibung

Die vorliegende Erfindung betrifft einen Reluktanzrotor mit einem Blechpaket aus einer Vielzahl von Reluktanzrotorblechen und einer Welle. Jedes Reluktanzrotorblech ist kreisscheibenförmig ausgebildet Es besitzt eine Zentralaussparung im Zentrum und einen von der Zentralaussparung bis zu einem am Außenrand des Reluktanzrotorblechs befindlichen Verbindungsring sich radial erstreckenden Flussleitabschnitt entlang einer d-Achse (magnetische Vorzugsrichtung). Ferner betrifft die Erfindung ein ahren eines Reluktanzrotors mit einem Blechpaket aus einer Vielzahl von Reluktanzrotorblechen und einer kreiszylinderförmigen Welle Derartige Reluktanzrotorbleche mit entsprechenden Aussparungen sind aus der Patentschrift US 5,818,140 A bekannt. Aus den Reluktanzrotorblechen lässt sich ein Blechpaket und ein entsprechender Rotor fügen. Durch die Ausstanzungen ergeben sich geschwungene, streifenförmige Blechabschnitte, die als Flussleitabschnitte dienen und den magnetischen Fluss in der für die Bereitstellung der nötigen Reluktanz des Rotors nötigen Weise führen. Zwischen den einzelnen Flussleitabschnitten befindet sich durch die Ausstanzungen Luft, d.h. ein unmagnetischer Bereich, der als magnetische Flusssperre wirkt. Durch die streifenförmigen Flussleitabschnitte ergibt sich eine hohe Drehmomentausbeute. Die magnetische Permeabilität des Blechpakets ist in Richtung der q-Achse, d.h. der magnetischen Sperrrichtung aufgrund der unmagnetischen Bereiche verhältnismäßig klein. Die streifenförmigen Flussleitabschnitte verlaufen quer zu der q-Achse und verbinden in Umfangsrichtung benachbarte Pole des Rotors, die jeweils auf d-Achsen (magnetische Vorzugsrichtungen) angeordnet sind. Die Ausstanzungen zum Bereitstellen der unmagnetischen Bereiche bzw. zum Ausbilden der Flussleitabschnitte führen aber zu einer Schwächung der mechanischen Stabilität des Blechpakets, so dass der beschriebene Rotor nicht für große Drehzahlen, insbesondere nicht für Drehzahlen größer 3000 Umdrehungen/Minute geeignet ist. Aus diesem Grund sind Reluktanzmotoren der beschriebenen Art nicht für die Drehzahlanforderungen im Bereich beispielsweise von Kraftfahrzeugen mit elektrischen Antrieben geeignet.

Speziell ist also das Rotorblech eines Reluktanzmotors (kurz: Reluktanzrotorblech) aufgrund der Funktionsweise bezogen auf die d- und q-Achse von hoher unterschiedlicher radialer Stabilität ausgeführt. So ist die d-Achse mit einem Flussleitabschnitt vom Innen- zum Außendurchmesser durchgehend aus Blech gebildet, während die q-Achse durch Flusssperren unterbrochen ist.

Die Rotorbleche werden beispielsweise durch einen zylindrischen Presssitz auf die Welle gefügt. Bei hohen Drehzahlen ist das Übermaß der Pressung höher auszuführen, da es durch die Fliehkraft zu einer Aufweitung des Rotorblechs im Innendurchmesser kommt und die Drehmomentenübertragung auf die Welle reduziert wird. Passfedern zur Drehmomentenübertragung wären zusätzlich ungünstig, da die in die Bleche einzubringende Nut die Stabilität weiter reduzieren würde.

Durch die unterschiedliche Stabilität in den Achsen kommt es beim Aufpressen zu unterschiedlichen Verformungen und damit zu unzulässigen Spannungen an den äußeren Stegen bzw. am äußeren Verbindungsring des Rotorblechs, insbesondere am Steg direkt neben der d-Achse. Das durchgängige Material in der d-Achse wird als Verformung vom Innen- zum Außendurchmesser durchgereicht, während im benachbarten Bereich aufgrund der Flusssperren keine Verformung von innen nach außen ankommt.

Zusätzlich werden die Stege, die die Flussleitabschnitte zusammenhalten, durch die Fliehkraft bei Drehung stark belastet. Bei einer relativ hohen Zugspannung, die bereits durch die Presspassung hervorgerufen werden kann, bleibt für die Fliehkraftbelastung keine oder nur wenig Reserve. Ein derartiger Reluktanzrotor ist also nur für relativ niedrige Drehzahlen geeignet.

Eine mögliche Optimierung besteht darin, zwischen Welle und Rotorblech Formschlüsse zu integrieren, um die Kräfte der Presspassung zurücknehmen und gleichzeitig ein hohes Moment übertragen zu können. In Bezug auf Formschlüsse können Nuten und Federn, Abflachungen oder aber Wellen mit Polygonquerschnitten verwendet werden. Mit diesen Maßnahmen lassen sich zwar die Zugspannungen aufgrund der nicht notwendigen Presspassung vermeiden, aber, wie oben angedeutet, wird das Blech durch Nuten unter Umständen zusätzlich destabilisiert und die Herstellung bzw. Fügung der Wellen ist kompliziert.

Die EP 1 734 639 A2 offenbart einen Reluktanzrotor gemäß dem Oberbegriff des Anspruchs 1 bzw. impliziert ein Verfahren zum Herstellen eines Reluktanzrotors gemäß dem Oberbegriff des Anspruchs 8.

Die DE 10 2009 047 485 A1 offenbart eine elektrische Maschine mit Rotorblechen, die Aussparungen zur mechanischen Spannungsreduktion enthalten. Die JP 2008-275385 A offenbart einen variablen Reluktanztyp-Drehzahlsensorrotor und einen bürstenlosen Motor. Die US 6,259,181 offenbart einen Rotorkern für einen Reluktanzmotor. Die JP 2012-196033 A offenbart einen Ständer für eine elektrische Maschine.

Die Aufgabe der vorliegenden Erfindung besteht somit darin, ein Reluktanzrotorblech vorzuschlagen, mit dem ein einfach herzustellender Rotor aufgebaut werden kann, welcher keinen übermäßigen Zugspannungen ausgesetzt ist.

Erfindungsgemäß wird diese Aufgabe gelöst durch einen Reluktanzrotor nach Anspruch 1.

In vorteilhafter Weise wird durch die Aussparung in jedem Flussleitabschnitt der mehreren d-Achsenhälften die Steifigkeit des Reluktanzrotorblechs in Richtung der d-Achse vermindert. Die Aussparung ist dabei so angeordnet und/oder geformt, dass der jeweilige Flussleitabschnitt nicht weiter verengt wird als die Verengung, die der Flussleitabschnitt an seiner engsten Stelle ohne die Aussparung besitzt. Dies bedeutet, dass der magnetische Fluss nicht mehr beeinträchtigt wird als an der schmalsten zusammenhängenden Stelle des Flussleitabschnitts, die typischerweise radial ganz außen an dem Verbindungsring liegt. Damit ist ein idealer Kompromiss zwischen der Reduktion der Steifigkeit und der magnetischen Beeinträchtigung gefunden. Gegenüber dem Stand der Technik brauchen bei der Erfindung die Reluktanzrotorbleche zur Ausbildung des Blechpakets nicht untereinander verbunden zu sein. Sie sind ausschließlich direkt im Bereich der Zentralaussparung mit einer Welle des Rotors verbunden. Beispielsweise können Verbindungsbolzen, kraftschlüssige Verbindungen benachbart zueinander angeordneter Reluktanzrotorbleche untereinander oder dergleichen eingespart werden. Bei der Erfindung erfolgt die Kraftübertragung zwischen dem Reluktanzrotorblechpaket und der Welle unmittelbar beziehungsweise direkt, und zwar ohne Vermittlung von weiteren Komponenten.

Die Aussparung zur Spannungsreduktion kann vollständig vom Material des Reluktanzrotorblechs umgeben sein. Dies bedeutet, dass die Aussparung vollständig innerhalb des jeweiligen Flussleitabschnitts liegt. Dies hat den Vorteil, dass die Zentralaussparung an ihrem gesamten Umfang reibschlüssig auf einer rein zylindrischen Welle angeordnet sein kann. Insbesondere kann ein Rand der Zentralaussparung des Reluktanzrotorblechs, vorzugsweise im q-Bereich zwischen den Aussparungen zur Spannungsreduktion, komplementär zur Welle ausgebildet sein. Dadurch kann eine große Kraftübertragung unter weitgehender Vermeidung einer Überlastung des Reluktanzrotorblechs erreicht werden. Die Spannungsreduktion bezieht sich auf eine Reduzierung mechanischer Spannungen.

Bei einer alternativen Ausführungsform ist ein Hohlraum der Aussparung mit einem Hohlraum der Zentralaussparung in Verbindung. Dies bedeutet, dass die beiden Hohlräume direkt ineinander übergehen bzw. die Grenzen der Hohlräume einander schneiden bzw. ineinander übergehen.

Speziell können zwei der d-Achsen senkrecht zueinander und zwei q-Achsen winkelhalbierend zwischen den d-Achsen angeordnet sein, wobei geschwungene, streifenförmige Blechabschnitte senkrecht an den q-Achsen angeordnet sind und die Blechabschnitte voneinander durch Ausstanzungen getrennt sind. Damit lässt sich ein vierpoliger Reluktanzrotor realisieren, dessen Pole jeweils um 90° versetzt angeordnet sind. In der Mitte zwischen jeweils zwei benachbarten Polen befinden sich die q-Achsen mit der magnetischen Sperrrichtung. Benachbarte q- und d-Achsen sind also zueinander um 45° versetzt.

Ferner kann das Reluktanzrotorblech zusätzlich zu der oder den Aussparungen zur Spannungsreduktion mindestens eine Kennmarkenaussparung aufweisen. Neben der Zentralaussparung, den Aussparungen zur Spannungsreduktion und den Ausstanzungen zwecks Flussreduktion ist also zusätzlich mindestens eine Aussparung als Kennmarke vorgesehen, um die Orientierung des Reluktanzrotorblechs einfacher zu erfassen. Dies ist bei der Paketierung hilfreich. Derartige Kennmarkenaussparungen sind in der Regel wesentlich kleiner als alle anderen Ausstanzungen, da sie weder den magnetischen Fluss noch die mechanische Stabilität beeinflussen sollen.

Die Zentralaussparung ist zum ausschließlichen Verbinden des Reluktanzrotorblechs mit der Welle des Reluktanzrotors ausgebildet Das Reluktanzrotorblech ist hierdurch ausschließlich im Bereich der Zentralaussparung mit der Rotorwelle befestigtbar. Dadurch werden weitere Befestigungsmöglichkeiten eingespart.

Das Reluktanzrotorblech ist ausschließlich im Bereich der Zentralaussparung mit der Rotorwelle verbunden. Eine Verbindung zu benachbarten Reluktanzrotorblechen kann eingespart werden. Die Zentralaussparung ist derart ausgebildet, dass sie in Form einer Presspassung mit der Welle verbunden werden kann. Hierdurch kann eine zuverlässige Verbindung erreicht werden.

Gemäß einer weiteren Ausgestaltung wird vorgeschlagen, dass das Reluktanzrotorblech ein Schrägungsführungselement aufweist, welches vorzugsweise an einem äußeren Umfang des Reluktanzrotorblechs angeordnet ist. Darüber hinaus kann dasSchrägungsführungselement auch im Bereich der Zentralaussparung der Reluktanzrotorbleche angeordnet sein. Das Schrägungsführungselement kann beispielsweise durch einen Vorsprung, eine Ausnehmung, Kombinationen hiervon und/oder der gleichen gebildet sein. Das Schrägungsführungselement ist vorzugsweise derart ausgebildet, dass es im Wesentlichen keine Unwucht im bestimmungsgemäßen Betrieb ausbildet. Beispielsweise können radial gegenüberliegend im Wesentlichen gleich ausgebildete Schrägungsführungselemente am Reluktanzrotorblech ausgebildet sein. Die Schrägungsführungselemente sind ferner vorzugsweise zum Zusammenwirken mit einer Schrägungsführungskulisse ausgebildet, so dass es möglich ist, die Reluktanzrotorbleche in vorgebbarer Weise gegeneinander verdreht im Blechpaket anzuordnen. Darüber hinaus kann vorgesehen sein, dass das Schrägungsführungselement nach Fertigstellen des Reluktanzrotors entfernt wird. Vorteilhaft ist dies besonders bei radial vorstehenden Schrägungsführungselementen.

Aus einer Vielzahl derartiger Reluktanzrotorbleche wird ein Blechpaket gebildet, welches auf eine Welle gefügt wird.

Dabei ist es vorteilhaft, wenn die Welle rotatorisch nur durch Reibschluss mit dem Blechpaket verbunden ist. Dies bedeutet, dass die Zentralaussparung abgesehen von weiteren Aussparungen, die in sie hineinragen, kreisförmig sein kann und ebenso die Welle rein kreiszylindrisch gebildet werden kann. Dadurch lässt sich ein sehr einfacher Aufbau der Welle realisieren.

Des Weiteren kann das Blechpaket geschrägt sein. Dabei sind die einzelnen Bleche des Blechpakets rotatorisch zueinander um einen geringen Winkelbetrag versetzt, wodurch die Drehmomentenwelligkeit einer elektrischen Maschine und insbesondere eines Synchron-Reluktanzmotors reduziert werden kann.

Vorzugsweise besitzen die Aussparungen auf jeder einzelnen d-Achse oder auf allen d-Achsen gleiche Abmessungen. Ebenso sollten die Aussparungen auf jeder einzelnen d-Achse oder auf allen d-Achsen den gleichen Abstand zum Zentrum des Reluktanzrotorblechs besitzen. Dadurch können Spannungen in allen Bereichen des Reluktanzrotorblechs verringert werden. Verfahrensseitig wird als Lösung ein Verfahren nach Anspruch 8 vorgeschlagen.

Die Erfindung ermöglicht es, durch Einsatz der Reluktanzrotorbleche gemäß der Erfindung auf weitere Befestigungsmöglichkeiten zu verzichten. Dadurch kann nicht nur ein besonders einfaches Herstellungsverfahren erreicht werden, sondern es entfallen auch zusätzliche Befestigungsmittel, die neben Kosten auch besondere Maßnahmen hinsichtlich des bestimmungsgemäßen Betriebs erfordern würden. Vorzugsweise kann der Stapel in einer Form vorbereitet werden, erfindungsgemäß auf die vorgegebene Temperatur aufgeheizt werden, wobei sodann eine kühlere, vorzugsweise nicht beheizte Welle in die durch die Zentralaussparungen gebildeten Öffnung eingeführt wird Beispielsweise kann der Temperaturunterschied 100 bis 250°C, vorzugsweise 150 bis 220°C, besonders bevorzugt 180°C betragen. Die Durchmesser der Öffnung und der Welle sind so aufeinander abgestimmt, dass bei Temperaturangleichung beziehungsweise Temperaturausgleich zwischen den Reluktanzrotorblechen und der Welle eine Presspassung ausgebildet wird.

Es wird ferner vorgeschlagen, dass an den Stapelenden jeweils eine Hülse mit einer Hülsenöffnung angeordnet wird, wobei die Hülsenöffnung den gleichen Durchmesser wie die Zentralaussparungen der Reluktanzrotorbleche hat. Durch Vorsehen der Hülsen kann erreicht werden, dass während der Herstellung des Blechpakets ein Auffächern der Reluktanzrotorbleche weitgehend vermieden werden kann, insbesondere während des Einführens der Welle in die Öffnung. Zu diesem Zweck kann vorgesehen sein, dass die Hülsen in ihrer jeweiligen Position fixiert sind. Darüber hinaus kann mit den Hülsen erreicht werden, dass eine Stabilisierung des Blechpakets insgesamt während des bestimmungsgemäßen Betriebs gewährleistet werden kann. Vorzugsweise werden die Stapelenden durch die Hülsen gestützt.

Weiterhin wird vorgeschlagen, dass der Stapel in einer Fädelform mit einer Schrägungsführungskulisse ausgebildet wird. Die Fädelform dient insbesondere dazu, beim Ausbilden des Stapels die Reluktanzrotorbleche in der gewünschten Orientierung benachbart zueinander anzuordnen und zu halten. Durch die Schrägungsführungskulisse kann dabei die Orientierung der Reluktanzrotorbleche gegenüber einander sichergestellt werden. Die Fädelform ermöglicht es somit, auf einfache zuverlässige Weise eine Schrägung des Blechpakets zu realisieren.

Weiterhin wird vorgeschlagen, dass der Stapel an seinen Stapelenden mit Druck beaufschlagt wird. Dadurch kann erreicht werden, dass die Reluktanzrotorbleche in kurzer Zeit auf eine gleichmäßige Temperatur erwärmt werden können. Zugleich kann erreicht werden, dass die Reluktanzrotorbleche jeweils unmittelbar zueinander benachbart angeordnet sind und unerwünschte Luftspalte weitgehend vermieden werden können.

Besonders vorteilhaft erweist es sich, wenn die Welle im druckbeaufschagten Zustand des Stapels eingeführt wird. Dadurch kann erreicht werden, dass die Reluktanzrotorbleche des Stapels auch bei mechanischer Einwirkung während des Einführens der Welle ihre Position beibehalten.

Darüber hinaus wird vorgeschlagen, dass während der Temperaturangleichung der Druck auf den Stapel einwirkt. Hierdurch kann erreicht werden, dass der Stapel seine Temperatur möglichst gleichmäßig ändert. Dadurch ergibt sich eine zuverlässige Presspassung in Bezug auf die eingeführte Welle. Verzug, Inhomogenitäten oder dergleichen können dadurch weitgehend vermieden werden.

Die vorliegende Erfindung wird nun anhand der beigefügten Zeichnungen näher erläutert, in denen zeigen:
- FIG 1: ein Reluktanzrotorblech eines Reluktanzrotors gemäß der vorliegenden Erfindung in einer schematischen Draufsicht,
- FIG 2: ein Rotorblechpaket mit einer Vielzahl von Reluktanzrotorblechen gemäß FIG 1 in einer schematischen Perspektivansicht,
- FIG 3: in einer schematischen Schnittansicht das Stapeln einer für die bestimmungsgemäße Funktion des Rotorblechpakets erforderliche Anzahl von Reluktanzrotorblechen zum Ausbilden eines Stapels,
- FIG 4: in einer schematischen Schnittansicht ein Anordnen jeweils einer Endplatte und ein Beheizen des Stapels,
- FIG 5: in einer schematischen Schnittansicht das Einführen der Rotorwelle und Herstellen einer Presspassung
- FIG 6: in einer schematischen Perspektivansicht einen Reluktanzrotor gemäß der Erfindung und
- FIG 7: in einer schematischen Perspektivansicht eine alternative Ausgestaltung für ein Anordnen jeweils einer Endplatte und ein Beheizen des Stapels auf Basis des Rotorblechpaktes gemäß FIG 2.

Die nachfolgend näher geschilderten Ausführungsbeispiele stellen bevorzugte Ausführungsformen der vorliegenden Erfindung dar.

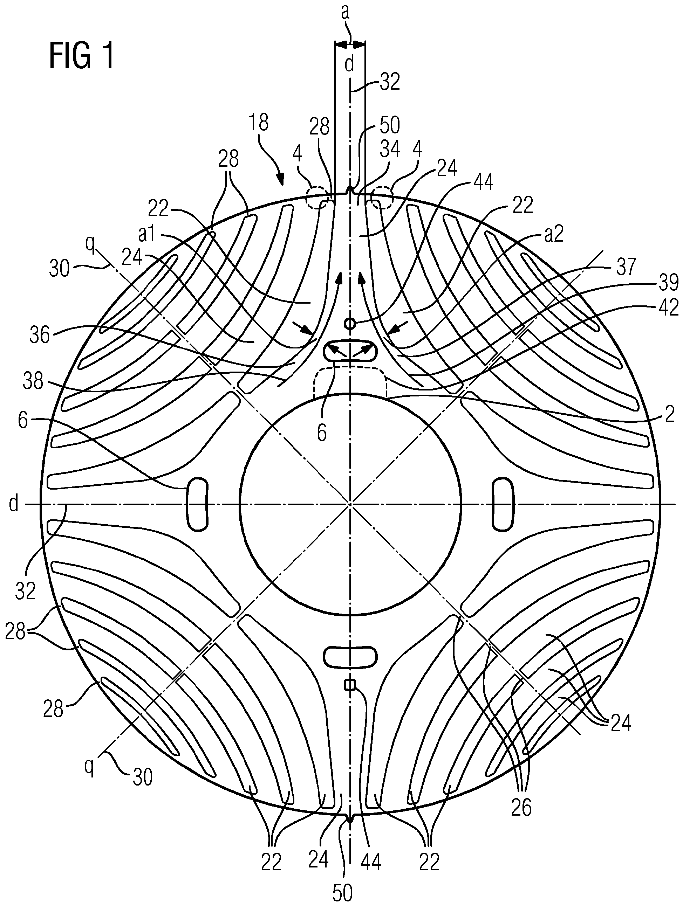

Das in FIG 1 abgebildete Reluktanzrotorblech 18 weist Aussparungen 22 auf, die magnetische Sperren bilden. Die Aussparungen 22 werden, wie alle übrigen Aussparungen auch, typischerweise durch Ausstanzung gebildet. Sie bilden unmagnetische Bereiche und fungieren also als magnetische Flusssperren. Zwischen den Aussparungen 22 ergeben sich somit Flussleitstücke, in denen der magnetische Fluss bei betriebsgemäßer Magnetisierung geführt wird.

Das in FIG 1 dargestellte Reluktanzrotorblech 18 dient für einen vierpoligen Reluktanzrotor. Dementsprechend weist das Reluktanzrotorblech 18 zwei senkrecht zueinander stehende d-Achsen auf, die magnetische Vorzugsrichtungen darstellen und die durch das Zentrum des Reluktanzrotorblechs 18 getrennt jeweils d-Achsenhälften 32 besitzen. Die Vorzugsrichtungen sind geprägt durch Flussleitstücke 24, die größtenteils durchgehend auf den jeweiligen d-Achsenhälften 32 verlaufen, wenn von einer Zentralaussparung 2 abgesehen wird, die zur Aufnahme einer Welle dient.

Die Aussparungen 22, welche als Magnetsperre dienen, verlaufen im Wesentlichen bogenförmig von einem Pol zum benachbarten Pol. Darüber hinaus sind sie im Wesentlichen streifenförmig. Aus Stabilitätsgründen können sie von Stegen 26 unterbrochen sein. Zwischen den bogenförmigen, streifenförmigen Aussparungen 22 ergeben sich somit ebenfalls streifenförmige, bogenförmige Flussleitabschnitte 24.

Die bogenförmigen, nicht magnetischen Aussparungen 22 zwischen benachbarten Polen verlaufen senkrecht zu den q-Achsen 30, die winkelhalbierend zwischen den d-Achsen liegen. Auf den q-Achsen 30 erfolgt also Magnetfeldsperrung. Zur näheren Wirkungsweise sei auf das eingangs erwähnte US-Patent 5,818,140 A von Vagati verwiesen.

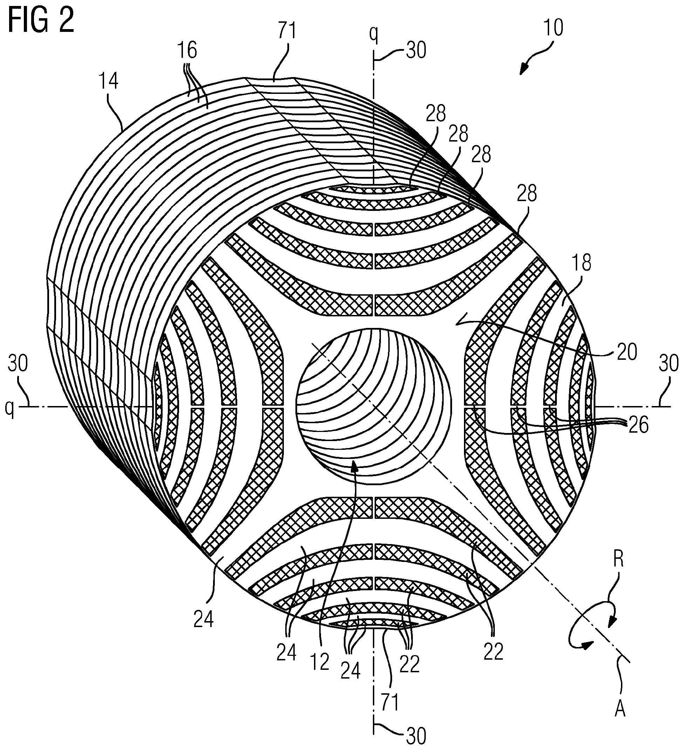

In FIG 2 ist ein Reluktanzrotor oder kurz Rotor 10 ohne Welle gezeigt. Der Rotor 10 kann in einen Reluktanzmotor eingebaut sein. Beispielsweise kann der Reluktanzmotor ein Antriebsmotor für ein elektrisch angetriebenes Kraftfahrzeug sein. Im eingebauten Zustand ist durch eine Durchgangsöffnung 12 des Rotors 10, die durch die Zentralaussparungen 2 gebildet wird, eine in FIG 2 nicht dargestellte Welle des Reluktanzmotors gesteckt. Der Rotor 10 ist auf die Welle gepresst. Die Welle und damit der Rotor 10 ist dann um eine Rotationsachse A drehbar gelagert, so dass der Rotor 10 in einem (nicht dargestellten) Stator des Reluktanzmotors eine Rotation R um die Rotationsachse A vollführen kann. Ein Durchmesser des Rotors 10 in radialer Richtung kann beispielsweise 20 cm und mehr betragen. Eine Länge des Rotors 10 in axialer Richtung kann beispielsweise 30 cm und mehr betragen.

Der Rotor 10 weist als magnetisch aktiven Teil ein Blechpaket 14 auf, das aus mehreren Schichten 16 gebildet ist, die jeweils weichmagnetisches, insbesondere ferromagnetisches, Material aufweisen. Dieses Material stammt von den Einzelblechen gemäß FIG 1. Die Schichten weisen ferner elektrisch isolierende Teilschichten auf, um Wirbelströme in dem Blechpaket 14 zu blockieren. Von den Schichten 16 sind in FIG 2 der Übersicht halber nur einige mit einem Bezugszeichen versehen. Jede Schicht 16 wird im Wesentlichen also durch ein Rotorblech 18 gebildet. In der FIG 2 ist nur das Rotorblech 18, welches sich an einer Stirnseite 20 in axialer Richtung entlang der Achse A an einem vorderen Ende befindet, mit einem Bezugszeichen versehen.

Die Rotorbleche 18 sind in der Weise fluchtend in dem Blechpaket 14 axial hintereinander angeordnet, dass die Aussparungen 22 und entsprechend auch die Flussleitabschnitte 24 axial fluchten, soweit keine Schrägung vorgesehen ist. Die Rotorbleche der Schichten 16 können alle die gleiche Form aufweisen.

Damit der Rotor 10 am Außenmantel geschlossen ist, besitzt jedes Rotorblech 18 an seinem Außenrand einen geschlossenen Verbindungsring 28. Er fixiert auch die Flussleitabschnitte 24.

Das Beispiel in den FIG 1 und 2 bezieht sich auf einen vierpoligen Rotor. Die Polzahl kann aber auch größer gewählt sein. Die Durchgangsöffnung 12 des Rotors 10 ist kreiszylinderförmig und die dazugehörige Welle ist ebenfalls kreiszylinderförmig. Der Rotor 10 bzw. das Blechpaket 14 wird dann durch Pressung auf die Welle gefügt. Das Drehmoment wird somit allein durch Reibschluss vom Rotor zur Welle übertragen. Die Presspassung ist entsprechend dem geforderten Drehmoment auszulegen und kann sehr hohe Kräfte mit sich bringen. Aufgrund der Struktur der Reluktanzrotorbleche 18 wird die Kraft entlang der d-Achsen 32 bei bekannten Blechschnitten praktisch unvermindert von der Zentralaussparung 2 nach außen zum Verbindungsring 28 geführt, da die Flussleitabschnitte eben bei diesen bekannten Blechschnitten durchgehend von der Zentralaussparung 2 zum Verbindungsring 28 reichen. In den Bereichen des Verbindungsrings zwischen den Polen bzw. d-Achsen 32 wird die Kraft der Presspassung nur vermindert oder gar nicht übertragen, da die Aussparungen 22 dies unterbinden. Deswegen ergeben sich in den Bereichen 4 des Verbindungsrings 28 sehr hohe Zugspannungen, welche zur Zerstörung der Rotorbleche 18 und damit des Rotors 10 führen können.

Um die Verformung bzw. Zugspannungen in den Bereichen 4 der Verbindungsringe 28 auf jeder d-Achsenhälfte zu reduzieren, werden erfindungsgemäß Aussparungen 6 im Bereich der d-Achsen bzw. d-Achsenhälften 32 eingebracht. Eine solche Aussparung 6, die ebenfalls durch Ausstanzung bewirkt werden kann, unterbricht eine direkte Kraftlinie entlang der jeweiligen d-Achsenhälfte 32. Die Aussparung 6 kann sich verformen, so dass sich geringere Verformungen des Verbindungsrings 28 im Bereich der jeweiligen d-Achsenhälfte 32 und damit auch geringere Zugspannungen in den Bereichen 4 der Verbindungsringe 28 ergeben. Damit ist die Bruch- bzw. Beschädigungsgefahr in diesen Bereichen deutlich reduziert.

Eine Aussparung 6 sollte so dimensioniert sein, dass sie magnetisch kaum Auswirkungen besitzt. Dies kann dadurch erreicht werden, dass der magnetische Fluss in dem Flussleitstück 24 im Bereich der d-Achse nicht stärker behindert wird als an seiner engsten Stelle in Flussrichtung. Der Fluss sollte also keine engeren Einschnitte erhalten als bei einem Blechschnitt ohne die Aussparungen 6.

Die engste Stelle 34 für den magnetischen Fluss im Bereich der Pole liegt am Übergang des Flussleitstücks 24, welches entlang der jeweiligen d-Achsenhälfte 32 verläuft, zu dem Verbindungsring 28. Das Blech dort wird durch die angrenzenden Aussparungen 22 verjüngt, welche hier am nächsten aufeinander zukommen. Es ergibt sich somit am Innenrand des Verbindungsrings 28 eine Engstelle der Breite a. Erfindungsgemäß sollte der magnetische Fluss in dem Flussleitstück 24 nicht weiter eingeschränkt sein als an der Engstelle 34.

Durch die Aussparung 6 in dem Flussleitabschnitt 24 wird dieser bereichsweise zweigeteilt und es entstehen links und rechts von der Aussparung 6 Teilleitabschnitte 36 und 37. Die Teilleitabschnitte 36 und 37 verlaufen also jeweils zwischen der Aussparung 6 zur Spannungsreduktion und der angrenzenden Aussparung 22 zur Flusssperrung. Jeder der Teilleitabschnitte 36, 37 besitzt für den jeweiligen magnetischen Teilfluss 38, 39 in dem jeweiligen Teilleitabschnitt 36, 37 eine Engstelle der Breite a1 bzw. a2. Diese Engstellen sind durch den kleinsten Querschnitt des jeweiligen Teilleitabschnitts 36, 37 charakterisiert. Damit also der magnetische Fluss durch die Aussparung 6 nicht weiter eingeschränkt wird als durch die Engstelle 34, darf die Summe der kleinsten Querschnittsfläche des einen Teilleitabschnitts 36 und der kleinsten Querschnittsfläche des anderen Teilleitabschnitts 37 nicht kleiner als die Querschnittsfläche des Flussleitabschnitts 24 an der Engstelle 34 sein. Da das Reluktanzrotorblech überall gleich dick ist, muss gelten: a1+a2 ≥ a.

Damit die Spannungsentlastung in dem Flussleitabschnitt 24 auf der d-Achsenhälfte 32 möglichst groß ist, sollte die Aussparung 6 zur Spannungsreduktion auch möglichst groß sein. Um gleichzeitig die obige Bedingung einhalten zu können, wird günstigerweise die Summe des jeweils kleinsten Querschnitts beider Teilleitabschnitte 36, 37 gleich der kleinsten, zu der d-Achse 32 senkrechten Querschnittsfläche des Flussleitabschnitts 24 radial oberhalb der Aussparung 6 gewählt. Vorzugsweise gilt dann: a1+a2=a.

Der magnetisch relevante kleinste Querschnitt an der Engstelle 34 befindet sich senkrecht zu der d-Achse 32, da sich der magnetische Fluss in diesem Bereich im Wesentlichen parallel zur d-Achse 32 bewegt.

Auf jeder d-Achsenhälfte 32 befindet sich also eine Aussparung 6. Der Ort der Aussparung 6 auf der jeweiligen d-Achsenhälfte 32 ist prinzipiell frei wählbar, solange obige Ungleichung eingehalten wird. Dementsprechend kann es sich wie in dem Beispiel von FIG 1 bei der Aussparung 6 um eine geschlossene Aussparung handeln, die vollständig von dem Blechmaterial umgeben ist. Gegebenenfalls kann die Aussparung 6 aber bis zur Zentralaussparung 2 reichen oder gar in sie hineinragen. Dies bedeutet, dass die beiden Aussparungen 2 und 6 dann ineinander übergehen. Eine solche Aussparung könnte beispielhaft die gestrichelte Kontur 42 (in FIG 1 ist nur eine von vieren eingezeichnet) besitzen. Dabei ist aber auch obige Ungleichung bezüglich der Querschnittsflächen bzw. der Breiten der Engstellen einzuhalten. Für diese Ausführungsvariante ist FIG 1 nur rein schematisch anzusehen. Insbesondere kann aber diese Ausführungsvariante von Bedeutung sein, wenn die Aussparungen 22 weiter nach unten zu der Zentralaussparung 2 gezogen sind bzw. die Zentralaussparung 2 größer gestaltet ist. Im vorliegenden Beispiel sind die Aussparungen 6 bzw. 42 alle gleich geformt. Zumindest sollten sie paarweise auf einer d-Achse gleich geformt sein (d.h. die Aussparung auf der einen d-Achsenhälfte sollte so geformt sein wie die Aussparung auf der gegenüberliegenden d-Achsenhälfte), um Spannungen in allen Bereichen des Reluktanzrotorblechs zu verringern. Darüber hinaus besitzen hier alle Aussparungen 6 bzw. 42 den gleichen Abstand zum Zentrum. Jedenfalls sollten auch hier gegenüberliegende Aussparungen vom Zentrum gleich entfernt sein.

Wenn die Aussparung 6 zur Reduktion der mechanischen Spannung in die Zentralaussparung 2 übergeht, greift die Presspassung somit verstärkt oder ausschließlich in den Bereichen der q-Achsen. Die Verformung nach außen im Bereich der d-Achsen 32 wird dadurch ebenfalls gering gehalten, wodurch ebenfalls eine Schonung in den Bereichen 4 erfolgt.

In das Reluktanzrotorblech 18 können ferner Kennmarkenausstanzungen 44 eingebracht sein. Diese dienen beim Fügen des Blechpakets zur besseren Orientierung. Sie sind wesentlich kleiner als die Aussparungen 6 zur Spannungsreduktion und wirken sich somit kaum mechanisch und kaum magnetisch aus. Erfindungsgemäß werden also verformungsreduzierende Maßnahmen zur Vermeidung von unzulässigen Spannungen in dem Reluktanzrotorblech getroffen. Diese Maßnahmen können durch Ausstanzungen realisiert werden, welche mit dem gleichen Stanzwerkzeug ausgeführt werden wie die übrigen Ausstanzungen in dem Rotorblech. Darüber hinaus ist die Welle des Rotors einfach zylindrisch ausgeführt Die Spannungen an den äußeren Stegen bzw. an dem Verbindungsring 28 verursacht durch den Presssitz werden verringert, wodurch Reserve für Fliehkraftbelastung vorhanden ist und eine Eignung für höhere Drehzahlen gegeben ist. Formschlüsse können also in der Welle vermieden werden. Wegen der Nutzungsmöglichkeit einer zylindrischen Welle ist eine Paketschrägung einfach zu realisieren.

Im Folgenden wird gemäß eines ersten Ausführungsbeispiels ein Herstellungsverfahren für einen Reluktanzrotor beschrieben, der das Blechpaket 14 aus einer Vielzahl von Reluktanzrotorblechen 18 gemäß der Erfindung sowie eine Welle 52, nämlich die Rotorwelle, aufweist.

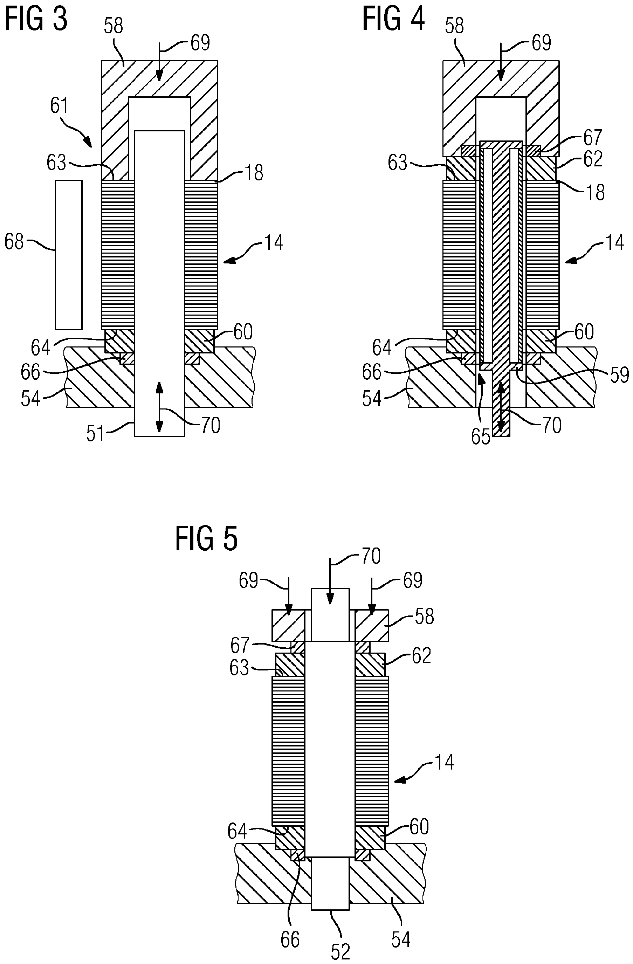

FIG 3 zeigt einen ersten Schritt der Herstellung des Reluktanzrotors, wonach ein Stapel 61 gebildet wird, der durch Stapeln einer für die bestimmungsgemäße Funktion des Blechpakets 14 erforderlichen Anzahl von Reluktanzrotorblechen 18 gebildet wird. Dabei wird eine Fädelform 68 benutzt, in die die Reluktanzrotorbleche 18 koaxial zueinander angeordnet werden. Aus den Figuren ist nicht ersichtlich, dass die Fädelform 68 eine Schrägungsführungskulisse aufweist, die dazu dient, die Reluktanzrotorbleche 18 gemäß einer Schrägung in einer axialen Richtung 70 anzuordnen. Zu diesem Zweck weisen die Reluktanzrotorbleche 18 jeweils zwei radial gegenüberliegende Schrägungsführungselemente 50 (FIG 1) auf, die vorliegend als kleine, radial nach außen ragende Vorsprünge ausgebildet sind und mit der Führungskulisse der Fädelform 68 zusammenwirken. Vorliegend ist vorgesehen, dass die Führungskulisse durch eine wendelförmig innenseitig an einer Fädelöffnung der Fädelform 68 angebrachten Nut gebildet ist. Dadurch wird erreicht, dass benachbarte Reluktanzrotorbleche 18 gegenüber einander geringfügig verdreht sind.

Aus FIG 3 ist ferner ersichtlich, dass der Stapel 61 in vertikaler Ausrichtung erstellt wird. Zu diesem Zweck ist die Fädelform 68 mit einem Kern 51 ausgerüstet, der in die Zentralaussparungen 2 der Reluktanzrotorbleche 18 eingreift. Auf einer Basisplatte 54 ist zunächst eine erste Hülse 66 angeordnet, die axial benachbart zu einer Endplatte 60 angeordnet ist. Gegenüberliegend zur Hülse 66 befindet sich an der Endplatte 66 das erste Stapelende 64, welches zugleich auch das erste Ende des Blechpakets 14 bildet. Nachdem die erforderliche Anzahl von Reluktanzrotorblechen 18 in der Fädelform 68 angeordnet ist, wird mittels eines Stempels 58 Druck 69 auf den so gebildeten Stapel 61 ausgeübt. Vorliegend ist ein Druck 69 von circa 20 to vorgesehen. Dadurch erfolgt eine plane Anlage benachbarter Reluktanzrotorbleche 18 zueinander, die in die Fädelform 68 eingefädelt sind.

Zu erkennen ist aus FIG 3 ferner, dass der Kern 51 in axialer Richtung 70 bewegbar ist. Im abgedrückten Zustand kann somit der Kern 51 aus der Fädelform 68 vertikal nach unten herausgenommen werden, wobei in diesem Zustand der Aufbau des Stapels 61 auf Grund der Druckeinwirkung durch die Kraft 69 über den Stempel 58 erhalten bleibt.

FIG 4 zeigt nun in einer weiteren schematischen Schnittansicht einen nächsten Schritt der Herstellung des Reluktanzrotors gemäß der Erfindung, wobei nunmehr eine zweite Endplatte 62 sowie vertikal nach oben anschließend eine zweite Hülse 67 angeordnet sind. Die Fädelform 68 mit ihrem Kern 51 ist vollständig entfernt. Der Stempel 58 beaufschlagt nunmehr den Stapel 61 mittels einer Kraft 69, die vorliegend 1 to beträgt. In die durch die Zentralaussparungen 2 gebildete Öffnung 65, die in FIG 3 durch den Kern 51 besetzt war, ist nunmehr in axialer Richtung 70 vertikal von unten eine Induktionsspule 59 eingeführt. Die Induktionsspule 59 ist mit einem Wechselstrom beaufschlagt, der ein magnetisches Wechselfeld erzeugt. Dieses ist so gewählt, dass eine thermische Aufheizung der Reluktanzrotorbleche 18 in gewünschter Weise erfolgt. Vorliegend ist vorgesehen, dass mittels induktiver Erwärmung ein Aufheizen auf etwa 250°C erfolgt. Zugleich wird mittels des Stempels 58 eine Druckkraft 69 in Höhe von etwa 1 to aufgebracht.

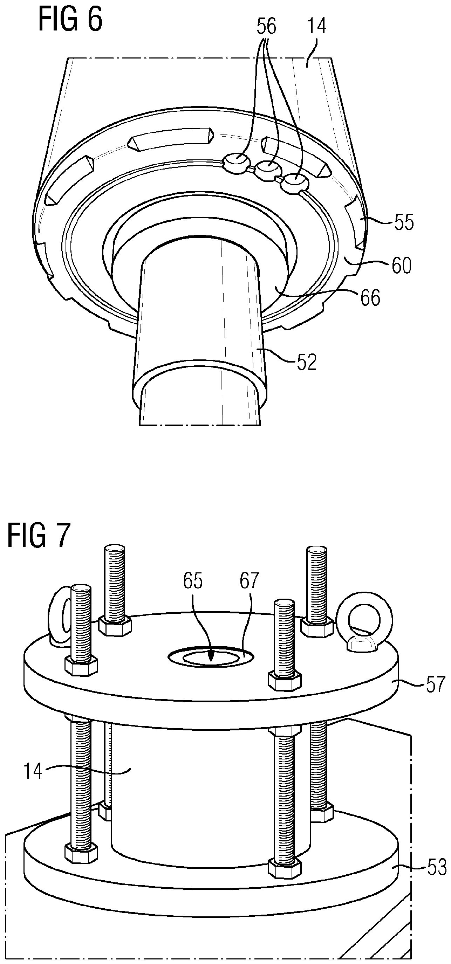

FIG 5 zeigt einen nächsten Schritt bei der Herstellung des Reluktanzrotors gemäß der Erfindung, wobei im aufgeheizten Zustand des Blechpakets 14 beziehungsweise des Stapels 61 die Induktionsspule 59 in axialer Richtung 70 vertikal nach unten entfernt worden ist und von vertikal oben ebenfalls in Richtung 70 die Rotorwelle 52 eingeführt wird. Die Rotorwelle 52 ist unbeheizt auf eine Temperatur von etwa 20°C. Der äußere Durchmesser der Rotorwelle 52 sowie der innere Durchmesser der Öffnung 65 im aufgeheizten Zustand sind so gewählt, dass bei Temperaturangleichung, das heißt, vorliegend vorzugsweise Abkühlen des Blechpaktes 14 auf etwa 20°C eine Presspassung zwischen dem Blechpaket 14 und hier ausschließlich den Reluktanzrotorblechen 18 und der Welle 52 ausgebildet wird. FIG 6 zeigt den hierdurch hergestellten Reluktanzrotor in einer perspektivischen schematischen Ansicht auf die Unterseite gemäß der FIG 3 bis 5. An dieser Stelle ist ferner vorgesehen, dass die Schrägungsführungselemente 50 (FIG 1) entfernt werden, damit sie nicht über einen äußeren Umfang des Reluktanzrotors hinausragen, zum Beispiel in einen Luftspalt des späteren Reluktanzmotors. Zu diesem Zweck ist vorgesehen, dass die Schrägungsführungselemente 50 mittels eines Drehverfahrens entfernt werden. Alternativ können natürlich auch andere materialabtragende Bearbeitungsverfahren eingesetzt werden, die die Integrität des Reluktanzrotors im Wesentlichen nicht beeinträchtigen.

Aus FIG 6 ist ferner ersichtlich, dass die Endscheibe 60 hülsenseitig eine unterbrochene Außenkontur 55 aufweist. mittels der Außenkontur 55 kann erreicht werden, dass eine Luftbewegung im Motorinnenraum erzeugt oder unterstützt werden kann. Dadurch kann eine Kühlung verbessert werden. Darüber hinaus erlaubt es diese Ausgestaltung, ein automatisierbares Wuchten durch Abbohren zu ermöglichen. In FIG 6 sind entsprechende Bohrungen 56 dargestellt. Vorliegend ist die Endscheibe 62 entsprechend ausgebildet.

FIG 7 zeigt in einer schematischen Perspektivansicht eine alternative Herstellung eines Blechpakets 14 gemäß der Erfindung basierend auf dem Blechpaket 14 gemäß FIG 2. Im Unterschied zur FIG 1 ist bei den Reluktanzrotorblechen 18 gemäß FIG 2 vorgesehen, dass ein Schrägungsführungselement 71 in Form einer kreissegmentförmigen Ausnehmung vorgesehen ist. Das Blechpaket 14 wird dem Grunde nach, wie bereits zur FIG 3 beschrieben, erstellt. Die weiteren Schritte sehen alternativ vor, dass das Blechpaket 14 zwischen zwei Spannplatten 53, 57 verspannt wird und in diesem Zustand in einem Ofen auf die gewünschte Temperatur aufgeheizt wird. Im aufgeheizten Zustand wird dann entsprechend dem Verfahrensschritt gemäß FIG 5 die nicht aufgeheizte Rotorwelle 52 eingeführt. Nachdem ein Temperaturausgleich erfolgt ist, wird die Verspannung durch die Spannplatten 53, 57 gelöst. Auch bei dieser Ausgestaltung der Erfindung sind Endscheiben und Hülsen vorgesehen, wobei lediglich die Hülse 67 in der Spannplatte 57 in FIG 7 ersichtlich ist. Da bei dieser Ausgestaltung die Schrägungsführungselemente 71 der Reluktanzrotorbleche 18 nicht über den äußeren Umfang des fertiggestellten Reluktanzrotors hinausragen, kann der Schritt des Entfernens der Schrägungsführungselemente 71 hier eingespart werden.

Die Erfindung ist durch die Ansprüche definiert.

## Patentansprüche

1. Reluktanzrotor (10) mit einem Blechpaket (14) aus einer Vielzahl von Reluktanzrotorblechen (18) und einer Welle, die kreiszylinderförmig ist und die rotatorisch nur durch Reibschluss mit dem Blechpaket (14) verbunden ist, wobei jedes Reluktanzrotorblech (18) derart ausgebildet ist, dass
- es kreisscheibenförmig ausgebildet ist und eine oder mehrere d-Achsen aufweist, wobei jede d-Achse getrennt durch das Zentrum des Reluktanzrotorblechs (18) zwei d-Achsenhälften (32) besitzt, mit
- einer Zentralaussparung (2) im Zentrum des Reluktanzrotorblechs und
- je einem von der Zentralaussparung (2) bis zu einem am Au-ßenrand des Reluktanzrotorblechs (18) befindlichen Verbindungsring (28) sich radial erstreckenden Flussleitabschnitt (24) entlang jeder d-Achsenhälfte (32),
wobei
- in jedem Flussleitabschnitt (24) auf der jeweiligen d-Achsenhälfte (32) eine Aussparung (6,42) angeordnet ist, so dass zu beiden Seiten der jeweiligen d-Achsenhälfte (32) in dem jeweiligen Flussleitabschnitt (24) je ein Teilleitabschnitt (36,37) gebildet ist, und
- die Summe des jeweils kleinsten Querschnitts beider Teilleitabschnitte (36,37) größer oder gleich der kleinsten, zu der jeweiligen d-Achsenhälfte (32) senkrechten Querschnittsfläche des Flussleitabschnitts (36,37) radial weiter außen von der Aussparung ist,
- die Reluktanzrotorbleche (18) ausschließlich im Bereich der Zentralaussparung (2) mit der Welle verbunden sind, um das Drehmoment somit allein durch Reibschluss vom Rotor zur Welle zu übertragen, sodass der Reluktanzrotor (10) eine kreiszylinderförmige Durchgangsöffnung (12) aufweist, die zur Aufnahme der Welle dient, so dass die Durchgangsöffnung (12) des Reluktanzrotors (10) durch die Zentralaussparungen (2) gebildet wird, um einen zylindrischen Presssitz auszubilden, **dadurch gekennzeichnet, dass** die Aussparung (6, 42) eine Aussparung zur mechanischen Spannungsreduktion ist.

2. Reluktanzrotor nach Anspruch 1, wobei die Aussparung (6, 42) zur Spannungsreduktion vollständig vom Material des Reluktanzrotorblechs (18) umgeben ist.

3. Reluktanzrotor nach einem der vorhergehenden Ansprüche, wobei am Reluktanzrotorblech (18) zwei der d-Achsen (32) senkrecht zueinander und zwei q-Achsen (30) winkelhalbierend zwischen den d-Achsen (32) angeordnet sind, und wobei geschwungene, streifenförmige Blechabschnitte senkrecht an den q-Achsen (30) angeordnet sind und die Blechabschnitte voneinander durch Ausstanzungen (22) getrennt sind.

4. Reluktanzrotor nach einem der vorhergehenden Ansprüche, **dadurch gekennzeichnet , dass** das Reluktanzrotorblech (18) zusätzlich zu der oder den Aussparungen (6,42) zur Spannungsreduktion mindestens eine Kennmarkenaussparung (44) aufweist.

5. Reluktanzrotor nach einem der vorhergehenden Ansprüche, wobei am Reluktanzrotorblech (18) die Aussparungen (6,42) auf jeder einzelnen d-Achse oder auf allen d-Achsen den gleichen Abstand zum Zentrum des Reluktanzrotorblechs besitzen.

6. Reluktanzrotor nach einem der vorhergehenden Ansprüche, **dadurch gekennzeichnet, dass** die Reluktanzrotorbleche (18) jeweils ein Schrägungsführungselement (50,71) aufweisen, welches an einem äußeren Umfang der Reluktanzrotorbleche(18) angeordnet ist.

7. Reluktanzrotor nach einem der vorhergehenden Ansprüche, wobei das Blechpaket (14) geschrägt ist.

8. Verfahren zum Herstellen eines ein Blechpaket (14) aus einer Vielzahl von Reluktanzrotorblechen (18) und einer kreiszylinderförmigen Welle (52) aufweisenden Reluktanzrotors, bei dem jedes Reluktanzrotorblech (18) derart ausgebildet ist, dass
- es kreisscheibenförmig ausgebildet ist und eine oder mehrere d-Achsen aufweist, wobei jede d-Achse getrennt durch das Zentrum des Reluktanzrotorblechs (18) zwei d-Achsenhälften (32) besitzt, mit
- einer Zentralaussparung (2) im Zentrum des Reluktanzrotorblechs und
- je einem von der Zentralaussparung (2) bis zu einem am Außenrand des Reluktanzrotorblechs (18) befindlichen Verbindungsring (28) sich radial erstreckenden Flussleitabschnitt (24) entlang jeder d-Achsenhälfte (32),
wobei
- in jedem Flussleitabschnitt (24) auf der jeweiligen d-Achsenhälfte (32) eine Aussparung (6,42) angeordnet ist, so dass zu beiden Seiten der jeweiligen d-Achsenhälfte (32) in dem jeweiligen Flussleitabschnitt (24) je ein Teilleitabschnitt (36,37) gebildet ist, und
die Summe des jeweils kleinsten Querschnitts beider Teilleitabschnitte (36,37) größer oder gleich der kleinsten, zu der jeweiligen d-Achsenhälfte (32) senkrechten Querschnittsfläche des Flussleitabschnitts (36,37) radial weiter außen von der Aussparung ist,
**dadurch gekennzeichnet, dass**
die Aussparung (6, 42) eine Aussparung zur mechanischen Spannungsreduktion ist, wobei das Verfahren folgende Schritte umfasst
- Stapeln einer für die bestimmungsgemäße Funktion des Blechpakets (14) erforderlichen Anzahl von Reluktanzrotorblechen (18) zum Ausbilden eines Stapels (61), wobei die Reluktanzrotorbleche (18) koaxial zueinander angeordnet werden, sodass der Reluktanzrotor (10) eine kreiszylinderförmige Durchgangsöffnung (12) aufweist, die durch die Zentralaussparungen (2) gebildet wird und die zur Aufnahme der Welle dient,
- Anordnen jeweils einer Endplatte (60,62) an gegenüberliegenden Stapelenden (63,64) des Stapels (61),
- Erwärmen des Stapels (61) auf eine vorgegebene Temperatur und
- Einführen einer eine geringere Temperatur als die Reluktanzrotorbleche (18) aufweisenden Welle (52) in eine durch Zentralaussparungen (2) der Reluktanzrotorbleche (18) gebildeten Öffnung (65), wobei ein Durchmesser der Welle (52) derart gewählt wird, dass bei einer Temperaturangleichung zwischen dem Stapel (61) und der Welle (52) eine Presspassung ausgebildet wird, um einen zylindrischen Presssitz auszubilden und die Reluktanzrotorbleche (18) ausschließlich im Bereich der Zentralaussparung (2) mit der Welle zu verbinden, sodass das Drehmoment somit allein durch Reibschluss vom Rotor zur Welle übertragen wird.

9. Verfahren nach Anspruch 8, **dadurch gekennzeichnet, dass** der Stapel (61) in einer Fädelform (68) mit einer Schrägungsführungskulisse ausgebildet wird.

10. Verfahren nach einem der Ansprüche 8 oder 9, d a**durch gekennzeichnet**, dass der Stapel (61) an seinen Stapelenden (63,64) mit Druck beaufschlagt wird.

11. Verfahren nach Anspruch 10, **dadurch gekenn-zeichnet**, dass die Welle (52) im druckbeaufschlagten Zustand des Stapels (61) eingeführt wird.

12. Verfahren nach Anspruch 10 oder 11, **dadurch gekennzeichnet , dass** während der Temperaturangleichung der Druck auf den Stapel (61) einwirkt.

## Claims

1. Reluctance rotor (10) having a laminated core (14) made of a plurality of reluctance rotor laminations (18) and a shaft, which is circular cylindrical in shape and which is connected rotatably to the laminated core (14) by friction locking only, wherein each reluctance rotor lamination (18) is embodied such that
- it is embodied in a circular disk shape and comprises one or more d-axes, wherein each d-axis has two d-axis halves (32) separated by the centre of the reluctance rotor lamination (18), having
- a central opening (2) in the centre of the reluctance rotor lamination and
- in each case a flux-conducting section (24) extending radially from the central opening (2) to a connecting ring (28) located on the outer edge of the reluctance rotor lamination (18) along each d-axis half (32),
wherein
- an opening (6, 42) is arranged in each flux-conducting section (24) on the respective d-axis half (32) such that a partial conducting section (36, 37) is formed on each of the two sides of the respective d-axis half (32) in the respective flux-conducting section (24), and
- the sum of the smallest cross-section of each of the two partial conducting sections (36, 37) is greater than or equal to the smallest cross-sectional area of the flux-conducting section (36, 37) perpendicular to the respective d-axis half (32) radially further out from the opening,
- the reluctance rotor laminations (18) are connected to the shaft exclusively in the region of the central opening (2) so that the torque is transmitted from the rotor to the shaft solely by means of friction locking, so that the reluctance rotor (10) comprises a circular cylindrical through-opening (12) which serves to receive the shaft, so that the through-opening (12) of the reluctance rotor (10) is formed by the central openings (2), in order to form a cylindrical press fit, **characterised in that** the opening (6, 42) is an opening for mechanical stress reduction.

2. Reluctance rotor (18) according to claim 1, wherein the opening (6, 42) for stress reduction is completely surrounded by the material of the reluctance rotor lamination (18).

3. Reluctance rotor according to one of the preceding claims, wherein, on the reluctance rotor lamination (18), two of the d-axes (32) are arranged perpendicular to one another and two q-axes (30) are arranged bisecting the angles between the d-axes (32) and wherein curved, strip-shaped lamination sections are arranged perpendicularly on the q-axes (30) and the lamination sections are separated from one another by punchedout sections (22).

4. Reluctance rotor according to one of the preceding claims, **characterised in that**, in addition to the opening or openings (6, 42) for stress reduction, the reluctance rotor lamination (18) comprises at least one identification opening (44).

5. Reluctance rotor according to one of the preceding claims, wherein, on the reluctance rotor lamination (18) the openings (6, 42) are at the same distance from the centre of the reluctance rotor lamination on each individual d-axis or on all d-axes.

6. Reluctance rotor according to one of the preceding claims, **characterised in that** the reluctance rotor laminations (18) each comprise a chamfer guide element (50, 71) arranged on an outer circumference of the reluctance rotor laminations (18).

7. Reluctance rotor according to one of the preceding claims, wherein the laminated core (14) is chamfered.

8. Method for producing a reluctance rotor comprising a laminated core (14) made of a plurality of reluctance rotor laminations (18) and a reluctance rotor comprising a circular cylindrical shaft (52) with which each reluctance rotor lamination (18) is embodied such that
- it is embodied in a circular disk shape and comprises one or more d-axes, wherein each d-axis has two d-axis halves (32), separated by the centre of the reluctance rotor lamination (18) having
- a central opening (2) in the centre of the reluctance rotor lamination and
- in each case a flux-conducting section (24) extending radially from the central opening (2) to a connecting ring (28) located on the outer edge of the reluctance rotor lamination (18) along each d-axis half (32),
wherein
- an opening (6, 42) is arranged in each flux-conducting section (24) on the respective d-axis half such that a partial conducting section (36, 37) is formed on each of the two sides of the respective d-axis half (32) in the respective flux-conducting section (24) and
the sum of the smallest cross-section of each of the two partial conducting sections (36, 37) is greater than or equal to the smallest cross-sectional area of the flux-conducting section (36, 37) perpendicular to the respective d-axis half (32) radially further out from the opening,
**characterised in that**
the opening (6, 42) is an opening for mechanical stress reduction,
wherein the method comprises the following steps:
- stacking a number of reluctance rotor laminations (18) required for the intended function of the laminated core (14) to form a stack (61), wherein the reluctance rotor laminations (18) are arranged coaxially with respect to one another, so that the reluctance rotor (10) comprises a circular cylindrical through opening (12) which is formed by the central openings (2) and which serves to receive the shaft,
- in each case, arranging an end plate (60, 62) on opposite stack ends (63, 64) of the stack (61),
- heating the stack (61) to a pre-specified temperature and
- introducing a shaft (52) with a lower temperature than the reluctance rotor laminations (18) into an opening (65) formed by central openings (2) of the reluctance rotor laminations (18), wherein a diameter of the shaft (52) is selected such that, in the case of temperature equalisation between the stack (61) and the shaft (52), a press fit is formed in order to form a cylindrical press fit and to connect the reluctance rotor laminations (18) to the shaft exclusively in the region of the central opening (2) so that the torque is transmitted from the rotor to the shaft solely by means of friction locking.

9. Method according to claim 8, **characterised in that** the stack (61) is shaped in a thread mould (68) with a chamfer guide rail.

10. Method according to one of claims 8 or 9, **characterised in that** the stack (61) is subjected to pressure at its stack ends (63, 64).

11. Method according to claim 10, **characterised in that** the shaft (52) is introduced when the stack (61) is subjected to pressure.

12. Method according to claim 10 or 11, **characterised in that** the pressure acts on the stack (61) during the temperature equalisation.

## Revendications

1. Rotor (10) à réluctance comprenant un paquet (14) de tôles en une pluralité de tôles (18) de rotor à réluctance et un arbre, qui est en forme de cylindre de section droite circulaire et qui est relié en rotation seulement par frottement avec le paquet (14) de tôles, dans lequel chaque tôle (18) du rotor à réluctance est constituée de manière
- à être constituée sous la forme d'un disque circulaire et à avoir un ou plusieurs axes d, dans lequel chaque axe d séparément possède deux demi-axes d (32) séparés par le centre de la tôle (18) du rotor à réluctance, en ayant
- un évidement (2) central au centre de la tôle du rotor à réluctance et
- respectivement une partie (24) de conduite du flux, s'étendant radialement de l'évidement (2) central jusqu'à un anneau (28) de liaison se trouvant sur le bord extérieur de la tôle (18) du rotor à réluctance, le long de chaque moitié (32) d'axe d, dans lequel
- dans chaque partie (24) de conduite de flux est disposé, sur la moitié (32) d'axe d respective, un évidement (6, 42) de manière à former des deux côtés de la moitié (32) d'axe d respective dans la partie (24) de conduite de flux respectivement une partie (36, 37) de conduite partielle, et
- la somme de la section transversale respectivement la plus petite des deux parties (36, 37) de conduite partielles est supérieure ou égale à la plus petite surface transversale, perpendiculaire à la moitié (32) d'axe d respective, de la partie (36, 37) de conduite de flux et radialement davantage vers l'extérieur de l'évidement,
- les tôles (18) du rotor à réluctance sont reliées à l'arbre exclusivement dans la région de l'évidement (2) central pour transmettre le couple ainsi seulement par frottement du rotor à l'arbre, de manière à ce que le rotor (10) à réluctance ait une ouverture (12) de passage en forme de cylindre de section droite circulaire, qui sert à recevoir l'arbre, de manière à former l'ouverture (12) de passage du rotor (10) à réluctance par les évidements (2) centraux afin de constituer un ajustement avec serrage cylindrique,
**caractérisé en ce que** l'évidement (6, 42) est un évidement de réduction de la tension mécanique.

2. Rotor à réluctance suivant la revendication 1, dans lequel l'évidement (6, 42) de réduction de la tension est entouré complètement du matériau de la tôle (18) du rotor à réluctance.

3. Rotor à réluctance suivant l'une des revendications précédentes, dans lequel, sur la tôle (18) du rotor à réluctance, deux des axes d (32) sont perpendiculaires entre eux et deux axes q (30) sont disposés sur les bissectrices entre les axes d (32), et dans lequel des parties de tôle basculées en forme de bande sont disposées perpendiculairement aux axes q (30) et les parties de tôle sont séparées les unes des autres par des découpes (22).

4. Rotor à réluctance suivant l'une des revendications précédentes, **caractérisé en ce que** la tôle (18) du rotor à réluctance a, en plus de l'un ou des évidements (6, 42) pour la réduction de la tension, au moins un évidement (44) de repérage caractéristique.

5. Rotor à réluctance suivant l'une des revendications précédentes, dans lequel, sur la tôle (18) de rotor à réluctance, les évidements (6, 42) ont, sur chaque axe d individuel ou sur tous les axes d, la même distance au centre de la tôle du rotor à réluctance

6. Rotor à réluctance suivant l'une des revendications précédentes, **caractérisé en ce que** les tôles (18) à réluctance ont respectivement un élément (50, 71) de guidage de l'obliquité, qui est disposé sur un pourtour extérieur des tôles (18) du rotor à réluctance.

7. Rotor à réluctance suivant l'une des revendications précédentes, dans lequel le paquet (14) de tôles a une obliquité.

8. Procédé de fabrication d'un rotor à réluctance ayant un paquet (14) de tôles (18) de rotor à réluctance et un arbre (52) en forme de cylindre de section droite circulaire, dans lequel chaque tôle (18) du rotor à réluctance est constituée de manière
- à être constituée sous la forme d'un disque circulaire et à avoir un ou plusieurs axes d, dans lequel chaque axe d séparément possède deux demi-axes d (32) séparés par le centre de la tôle (18) du rotor à réluctance, en ayant
- un évidement (2) central au centre de la tôle du rotor à réluctance et
- respectivement une partie (24) de conduite du flux, s'étendant radialement de l'évidement (2) central jusqu'à un anneau (28) de liaison se trouvant sur le bord extérieur de la tôle (18) du rotor à réluctance, le long de chaque moitié (32) d'axe d, dans lequel
- dans chaque partie (24) de conduite de flux est disposé sur la moitié (32) d'axe d respective un évidement (6, 42) de manière à former des deux côtés de la moitié (32) d'axe d respective dans la partie (24) de conduite de flux respectivement une partie (36, 37) de conduite partielle, et
- la somme de la section transversale respectivement la plus petite des deux parties (36, 37) de conduite partielle est supérieure ou égale à la plus petite surface transversale, perpendiculaire à la moitié (32) d'axe d respective, de la partie (36, 37) de conduite de flux et radialement davantage vers l'extérieur de l'évidement,
**caractérisé en ce que** l'évidement (6, 42) est un évidement de réduction de la tension mécanique,
dans lequel le procédé comprend les stades suivants :
- empilement d'un nombre, nécessaire au fonctionnement conforme aux prescriptions du paquet (14) de tôles, de tôles (18) de rotor à réluctance pour la constitution d'une pile (61), dans lequel on dispose les tôles (18) du rotor à réluctance coaxialement les unes par rapport aux autres, de manière à ce que le rotor (10) à réluctance ait une ouverture (12) de passage en forme de cylindre de section droite circulaire, qui est formée par les évidements (2) centraux et qui sert à la réception de l'arbre,
- mise respectivement d'une plaque (60, 62) d'extrémité sur des extrémités (63, 64) opposées de la pile (61),
- échauffement de la pile (61) à un température donnée à l'avance et
- introduction d'un arbre (52) ayant une température plus basse que les tôles (18) du rotor à réluctance, dans une ouverture (65) formée par les évidements (2) centraux des tôles (18) du rotor à réluctance, dans lequel on choisit un diamètre de l'arbre (52), de manière à constituer, lors d'une égalisation de température entre la pile (61) et l'arbre (52), un ajustement serré afin de constituer un ajustement serré cylindrique et de relier les tôles (18) du rotor à réluctance à l'arbre (52) exclusivement, dans la région de l'évidement (2) central, de manière à transmettre le couple ainsi seulement par frottement du rotor à l'arbre.

9. Procédé suivant la revendication 8, **caractérisé en ce que** l'on constitue la pile (61) en une forme (68) en fil ayant une coulisse de guidage d'obliquité.

10. Procédé suivant l'une des revendications 8 ou 9, **caractérisé en ce qu'**on soumet la pile (61) à une pression à ses extrémités (63, 64) .

11. Procédé suivant la revendication 10, **caractérisé en ce que** l'on introduit l'arbre (52) alors que la pile (61) est soumise à une pression.

12. Procédé suivant la revendication 10 ou 11, **caractérisé en ce que** l'on fait agir la pression sur la pile (61) pendant l'égalisation de la température.
